# DEMANDE DE BREVET EUROPEEN

(11) **EP 1 067 177 A1**
(43) Date de publication de la demande: **10.01.2001**
(21) Numéro de dépôt: 99440184.2
(22) Date de dépôt: 08.07.1999
(51) Int. Cl.: C12G 1/02

(54) **Cuve de fermentation destinée plus particulièrement à la vinification des vins rouges**

(71) Demandeur: Tec Inox S.A., 42125 Le Coteau (FR)
(72) Inventeur: Tollis, Silvio, Mably, 42300 Roanne (FR)
(74) Mandataire: Arbousse-Bastide, Jean-Claude Philippe

(57) **Abrégé**

Cuve de fermentation (1) destinée plus particulièrement à la vinification des vins rouges, comprenant au moins deux compartiments superposés (10,11), des moyens (12,13) permettant de faire passer le jus (20) contenu dans le compartiment inférieur dans le compartiment supérieur (11) et un moyen d'aspersion (16') du chapeau de marc surnageant le jus (20) contenu dans le compartiment inférieur (10).

Le fond (14) du compartiment supérieur (11) comporte au moins trois orifices (4) associés à des moyens de fermeture (41) aptes à être commandés en ouverture de manière à provoquer un délestage du jus (20) contenu dans le compartiment supérieur (11) dans le compartiment inférieur (10), entraînant le fractionnement du chapeau de marc contenu dans ce dernier.

## Description

La présente invention a pour objet une cuve de fermentation destinée plus particulièrement à la vinification des vins rouges.

On connaît actuellement des cuves de fermentation à fonctionnement automatique pour installations de vinifications, comme celle décrite dans le document FR-A-2512056, qui comprend une portion inférieure destinée à contenir le moût à vinifier et une portion supérieure ayant une paroi de fond qui ferme le haut de la portion inférieure et qui est pourvue d'une ouverture. Des moyens sont prévus pour faire passer périodiquement une partie du liquide du fond de la portion inférieure dans la portion supérieure, ainsi que des moyens à soupapes pour décharger le liquide contenu dans la portion supérieure dans la portion inférieure à travers l'ouverture, afin d'arroser le chapeau de marc surnageant le moût contenu dans la portion inférieure.

Toutefois la vanne d'aspersion de ce type de dispositif ne permet pas d'obtenir une aspersion suffisamment puissante pour fractionner le chapeau de marc et le mélanger au moût qu'il surnage.

Le document FR-A-2767531 décrit également une cuve de vinification à deux compartiments superposés dont le compartiment inférieur est destiné à contenir le moût à vinifier, comprenant des moyens pour faire passer périodiquement une partie du liquide du fond du compartiment inférieur dans le compartiment supérieur. Une vanne de fond permet, périodiquement, l'évacuation du liquide du compartiment supérieur dans le compartiment inférieur, étant actionnée par un dispositif de commande conçu pour faire varier la section d'écoulement du liquide à travers ladite vanne de fond suivant une loi cyclique prédéterminée. La vanne de fond permet d'obtenir par une variation d'ampleur et de débit du jet d'arrosage une aspersion uniforme sur toute la surface exposée du chapeau de marc et une action de désagrégation dudit chapeau qui évite la formation de voies préférentielles d'écoulement.

Toutefois, la présence d'une vanne assurant à la fois la fonction d'aspersion et de désagrégation du chapeau de marc ne permet pas d'obtenir une bonne répartition de l'effet de désagrégation sur toute la surface du chapeau de marc.

Le document FR-A-2766839 décrit également un dispositif pour la fermentation de jus de raisin comprenant deux cuves superposées mise en communication par une valve disposée centralement dans le fond de la cuve supérieure et comportant un moyen commandé de manière à se gonfler et à se dégonfler pour respectivement fermer et ouvrir le conduit de ladite valve.

Ce dispositif utilise également une vanne située dans le fond de la cuve supérieure pour réaliser un écoulement destiné à l'aspersion plus ou moins forte de la surface du chapeau de marc. Cependant cette vanne comporte de nombreuses chicanes qui ne permettent pas d'obtenir un effet de désagrégation suffisant du chapeau de marc, ni une bonne répartition de cet effet de désagrégation.

La présente invention a pour but de remédier à ces inconvénients en proposant une cuve qui permet une meilleure répartition de l'effet de désagrégation, ainsi qu'un effet de désagrégation plus important, s'apparentant à un pigeage.

La cuve de fermentation selon la présente invention est du type comprenant au moins deux compartiments superposés, des moyens permettant de faire passer le liquide contenu dans le compartiment inférieur dans le compartiment supérieur et un moyen d'aspersion du chapeau de marc surnageant le jus contenu dans le compartiment inférieur, et elle se caractérise essentiellement en ce que le fond du compartiment supérieur comporte au moins trois orifices associés à des moyens de fermeture aptes à être commandés en ouverture de manière à provoquer un délestage du jus contenu dans le compartiment supérieur dans le compartiment inférieur.

Dans un mode de réalisation préférentiel du dispositif selon l'invention chaque orifice se prolonge vers le bas par un tube fermé par une vanne.

Selon une caractéristique aditionnelle de l'invention les vannes sont des vannes à membrane, à pelle ou à papillon actionnées pneumatiquement ou hydrauliquement.

Selon une autre caractéristique de l'invention le moyen d'aspersion est relié aux moyens permettant d'envoyer le jus contenu dans le compartiment inférieur vers le compartiment supérieur de manière à réaliser une aspersion du chapeau de marc contenu dans le compartiment inférieur soit par le jus contenu dans le compartiment supérieur soit, directement, par le jus contenu dans le compartiment inférieur.

Les moyens permettant de faire passer le jus du compartiment inférieur vers le compartiment supérieur peuvent consister en une pompe de remontage reliée en entrée à une ouverture de sortie dudit jus située à proximité du fond du compartiment inférieur et en sortie à un conduit débouchant dans le compartiment supérieur.

Selon une autre caractéristique additionnelle de l'invention l'extrémité du conduit de remontage du liquide comporte un moyen permettant à la fois de remplir le compartiment supérieur et d'effectuer des opérations d'aspersion de la surface du liquide qu'il contient dans le cas où l'on désire vinifier deux quantités ou deux qualités différentes.

Le délestage du liquide contenu dans le compartiment supérieur au moyen des vannes de délestage permet d'obtenir plusieurs jets de liquide verticaux et puissants venant, de par leur répartition, fractionner le chapeau de marc avec une bonne répartition de l'effet de désagrégation résultant. A cet effet les vannes sont commandées en ouverture de préférence simultanément.

Les avantages et les caractéristiques de la présente invention ressortiront plus clairement de la description qui suit et qui se rapporte au dessin annexé, lequel en représente plusieurs modes de réalisation non limitatifs.
- la figure 1 représente une vue en coupe longitudinale d'une cuve à deux étages selon l'invention.
- la figure 2a représente une vue en coupe longitudinale partielle d'une cuve selon l'invention avec aspersion du chapeau de marc par le jus provenant directement de la cuve inférieure.
- la figure 2b représente la même vue en coupe de la cuve en phase de remplissage du compartiment supérieur.
- la figure 2c représente la même vue en coupe de la cuve avec aspersion du chapeau de marc par le jus contenu dans le compartiment supérieur.
- la figure 2d représente la même vue en coupe de la cuve en cours de délestage du jus contenu dans le compartiment supérieur.

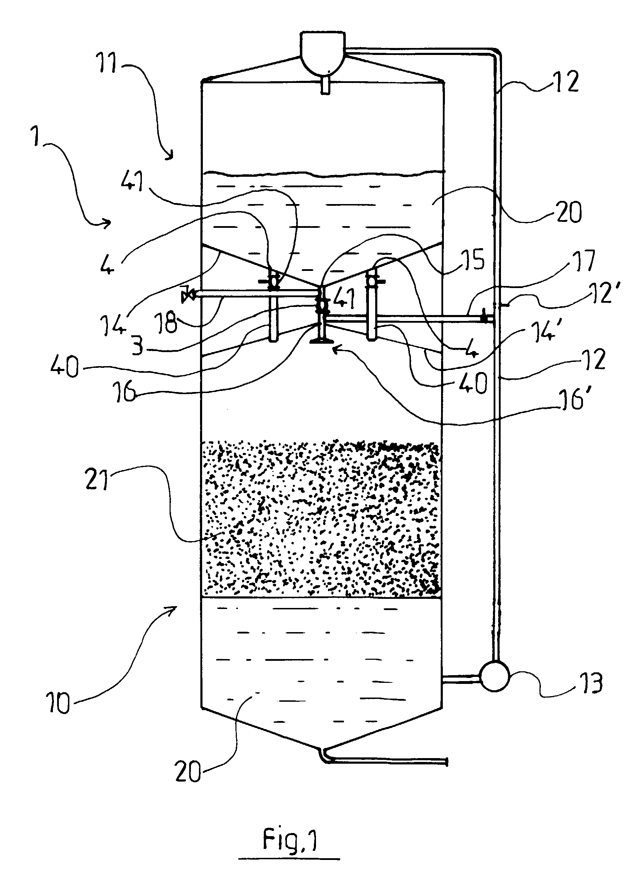

Si on se réfère à la figure 1 on peut voir qu'une cuve de fermentation 1 selon l'invention est constituée de deux compartiments superposés inférieur 10 et supérieur 11, de forme cylindrique, le compartiment inférieur 10 contenant du jus de raisin 20 surmonté d'un chapeau de marc 21 tandis que le compartiment supérieur 11 contient uniquement du jus 20.

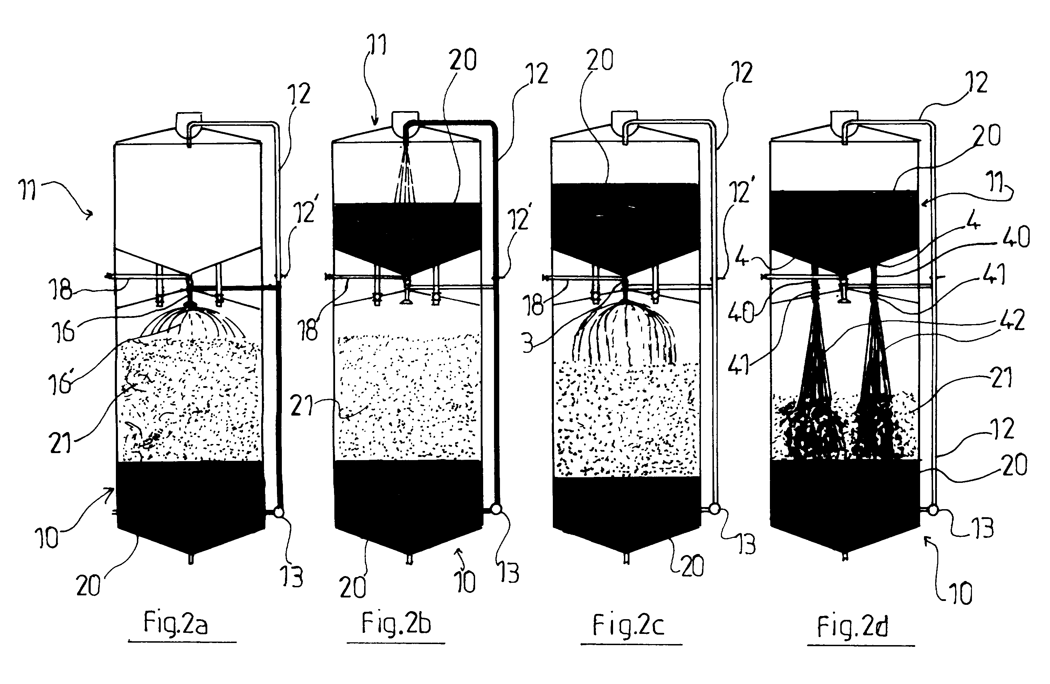

Les compartiments 10 et 11 sont reliés entre eux par un conduit extérieur 12 débouchant dans la partie haute du compartiment supérieur 11, permettant d'envoyer, au moyen d'une pompe 13, du jus 20 contenu dans le compartiment inférieur 10 vers le compartiment supérieur 11, comme on peut le voir sur la figure 2b.

Le compartiment supérieur 11 possède un fond 14 sensiblement conique qui comporte à son point le plus bas un orifice 15 se prolongeant par un conduit vertical 16 fermé par une vanne 3.

Le conduit vertical 16 se termine par une partie 16' en forme de "chapeau chinois" permettant d'obtenir un effet d'aspersion bien connu dans le domaine de la vinification et est relié d'une part, en aval de la vanne 3, par un conduit 17 au conduit extérieur 12 et d'autre part, en amont de la vanne 3, à un conduit 18. Un clapet d'obturation 12' permet, lors du fonctionnement de la pompe 13, de faire passer le jus provenant du compartiment inférieur 10, sous l'action de la pompe 13, du conduit 12 au conduit 16, via le conduit 17, et d'asperger le chapeau de marc 21 surnageant le jus 20 contenu dans le compartiment inférieur 10, comme on peut le voir sur la figure 2a.

Une deuxième paroi 14' également conique, et à peu près symétrique de la paroi 14, permet de délimiter un compartiment abritant les conduits 16, 17, 18.

Sur la figure 2c on peut voir que l'aspersion du chapeau de marc 21 peut également être réalisée par le jus 20 contenu dans le compartiment supérieur, après avoir commandé la vanne 3 en ouverture et fermé le conduit 18 et le clapet 12'.

Le conduit 18 relié au conduit 16 en amont de la vanne 3 permet lorsque celle-ci est fermée de vidanger le compartiment supérieur 11.

Le fond 14 du compartiment supérieur 11 comporte également trois orifices 4, dont deux seulement sont visibles sur les figures, se prolongeant chacun vers le bas par un tube vertical 40 fermé par une vanne 41 qui, lorsqu'elle est commandée en ouverture, déclenche le déversement du jus 20 contenu dans le compartiment supérieur 11, à travers les tubes 40, sous forme de jets 42 (figure 2d) à forte pression atteignant brutalement le chapeau de marc 21 contenu dans le compartiment inférieur 10, ce qui a pour effet de le fractionner de manière à immerger une grande partie de sa masse dans le jus 20. La présence de plusieurs orifices 4 pratiqués dans le fond 14 du compartiment supérieur 11, prolongés par des tubes 40, et répartis régulièrement au-dessus de la surface du chapeau de marc 21 assure une bonne répartition de l'effet de désagrégation de ce dernier.

Ainsi le dispositif selon l'invention permet de réaliser, par commande manuelle ou programmée:
- soit, en commandant la mise en marche de la pompe 13 et la fermeture du clapet 12', un arrosage du chapeau de marc 21 au moyen de la pomme d'arrosage 16' en forme de "chapeau chinois" par le moût contenu dans le compartiment supérieur 11 en commandant l'ouverture de la vanne 3 ou, directement, par le moût contenu dans le compartiment inférieur 10 ;
- soit, après avoir commandé simultanément l'ouverture des vannes 4, une opération intensive et rapide de délestage du jus 20 contenu dans le compartiment supérieur 11 sur le chapeau de marc 21 surnageant le jus 20 contenu dans le compartiment inférieur pour le fractionner en plusieurs endroits bien répartis.

On notera que le conduit 12 peut comporter à son extrémité débouchant dans le compartiment supérieur 11 une pomme d'arrosage permettant à la cuve selon l'invention de vinifier séparément des capacités distinctes et d'arroser dans ce cas le chapeau de marc surnageant au-dessus du jus contenu dans le compartiment supérieur par le jus contenu dans le compartiment inférieur.

Le compartiment inférieur comprend en outre, non représentés, une vanne pour sa vidange, une goulotte de décuvage, et des pales de décuvage dont l'axe peut se prolonger axialement à la cuve par une vis casse-pont. Il peut également être équipé d'une grille de filtration amovible.

## Revendications

1. Cuve de fermentation (1) destinée plus particulièrement à la vinification des vins rouges, du type comprenant au moins deux compartiments superposés (10,11), des moyens (12,13) permettant de faire passer le jus (20) contenu dans le compartiment inférieur dans le compartiment supérieur (11) et un moyen d'aspersion (16') du chapeau de marc surnageant le jus (20) contenu dans le compartiment inférieur (10), caractérisé en ce que le fond (14) du compartiment supérieur (11) comporte au moins trois orifices (4) associés à des moyens de fermeture (41) aptes à être commandés en ouverture de manière à provoquer un délestage du jus (20) contenu dans le compartiment supérieur (11) dans le compartiment inférieur (10) entraînant le fractionnement du chapeau de marc contenu dans ce dernier.

2. Cuve de fermentation selon la revendication 1 caractérisée en ce que chaque orifice (4) de délestage se prolonge vers le bas par un tube (40) fermé par une vanne (41).

3. Cuve de fermentation selon la revendication 2 caractérisée en ce que la vanne (41) est une vanne à membrane, à pelle ou à papillon commandée pneumatiquement ou hydrauliquement.

4. Cuve de fermentation selon l'une quelconque des revendications précédentes caractérisée en ce que le moyen d'aspersion (16') est relié aux moyens (12,13) permettant de faire passer le jus (20) contenu dans le compartiment inférieur (10) dans le compartiment supérieur (11) de manière à permettre de réaliser une aspersion du chapeau de marc (21) surnageant le jus (20) contenu dans le compartiment inférieur (10) soit par le jus (20) contenu dans le compartiment supérieur (11) soit, directement, par le jus (20) contenu dans le compartiment inférieur (10).

5. Cube de fermentation selon l'une quelconque des revendications précédentes caractérisée en ce que les moyens permettant d'envoyer le jus (20) contenu dans le compartiment inférieur (10) vers le compartiment supérieur (11) comprennent un conduit (12) reliant les deux compartiments supérieur (11) et inférieur (10) par l'intermédiaire d'une pompe (13), ledit conduit débouchant dans la partie haute du compartiment supérieur (11) et comportant à son extrémité libre un moyen d'aspersion permettant soit de remplir le compartiment supérieur (11) soit d'effectuer une aspersion du chapeau de marc surnageant le jus (20) contenu dans ledit compartiment supérieur (11).
